# EUROPEAN PATENT SPECIFICATION

(11) **EP 0 550 261 B1**
(45) Date of publication and mention of the grant of the patent: **19.06.1996**
(21) Application number: 92311782.4
(22) Date of filing: 24.12.1992
(51) Int. Cl.: F16D 43/21, F16D 7/08

(54) **Device for driving power transmission**
Antriebskraft-Übertragungsvorrichtung
Dispositif de transmission pour force motrice

(30) Priority: 28.12.1991 JP 359899/91
(43) Date of publication of application: 07.07.1993
(73) Proprietor: ITOH ELECTRIC CO. LTD., Ksai-shi, Hyogo 679-01 (JP)
(72) Inventor: Uchida, Hiroshi, Kasai-shi, Hyogo 675-01 (JP)
(74) Representative: Linn, Samuel Jonathan

(56) References cited:
- EP-A- 0 168 124
- WO-A-85/02661
- DE-A- 2 245 720
- DE-C- 430 562
- FR-A- 2 074 860
- FR-A- 2 170 324

## Description

The present invention relates to a device for driving power transmission and particularly to a device which is adapted to be able to disconnect a driving shaft from a driven member with good responsibility and high accuracy, and also set a transfer torque applied to the driven member to a desired value automatically.

A driving power transmission system using a motor as a driving source is often employed in various machines.

In such a driving power transmission system, if the driving motor is connected directly to a driven member, the driving motor may be burned or machine elements may be destroyed in the case of an excessive load applied to the driven member. Therefore, generally a device for driving power transmission is placed between the shafts of the driving motor and the driven member so that the device for drive power transmission may intercept the transmission of the excessive load to the driving motor so as to protect the driving motor and other mechanical functions.

Conventionally in this kind of driving power transmission device, a friction type clutch is placed as a driving power transmission system between the shafts of the driving motor and the driven member so as to maintain the connection of the clutch by means of spring members. When the load on the driven member becomes large, the transmission of the excessive load is limited by sliding friction surfaces mutually in opposition to a force of spring members.

However, in the conventional device for driving power transmission, the magnitude of a load which causes the clutch to slide depends on the force of the springs and inherent physical properties or a finished state of a friction surface. Accordingly, if the assembling accuracy of the clutch device is bad, then the sliding start of the clutch device varies, by which the operational reliability is lowered.

When the device is used for a long period of time, a set value changes widely and the characteristics of static friction and dynamic friction also widely change. Thus a significant change with passage of time causes the clutch reliability to be further lowered. For the purpose of overcoming such problems, a large-sized, complicated and expensive device had to be employed.

In Japanese Patent unexamined Publication No. 150517/1990 and so on, there is an improved clutch device provided with an irregular cam system between the driving shaft and the driven member, which comprises a concave cam member and a convex cam member which are slidably engaged with each other so as to be able to disconnect the engagement therebetween by making the contact surfaces slide mutually when the excessive load is applied thereto. However, in such a cam system the operational torque for disconnecting the clutch system will vary significantly due to the contact surface condition and the inclined angle accuracy of the concave and convex cams to be mutually engaged. Therefore, it requires a high accuracy machining for cam surface to operate the clutch system controllably with high accuracy, thus resulting in a much high cost clutch system.

In order to realize the above requirements, various so-called ball-pocket couplings are known as shown in USP. Nos. 2,587,712, 3,511,349, 3,552,147.

WO-8502661 discloses a narrow tolerance range slip clutch in which a ball ramp and clutch are enclosed in a housing. The apparatus disclosed is complex and cannot readily be adjusted.

In view of such problems, it is, accordingly, an object of the present invention to overcome the disadvantages in the prior art ball-pocket clutch system by providing a device for driving power transmission, using an inexpensive clutch, which is superior in reliability, controllability and a variable setting function.

According to the present invention, there is provided a device for transmission of power from a driving shaft (1) to a driven member (5) comprising:
a multiple friction disk clutch mechanism (4) arranged to connect the driving shaft (1) and the driven member (5); a ball-pocket cam mechanism (3) comprising first cam recesses (16), a sliding member (2) provided with second cam recesses (22) and cam balls (3) which are pocketed within the first and second recesses (16) and (22); and an adjustable pressurizing member (7) to provide a coupling force with the cam balls (3) between the first and the second cam pockets (16) and (22) as well as a friction force between the friction clutch plates (4);
characterized in that said driving shaft (1) carries the first recesses (16) on an end surface thereof, the driving shaft (1) comprising a small diameter part (10) on which the sliding member (2) can be mounted to slide in an axial direction thereof,
in that said driven member (5) is a hollow drum shape to provide a housing space for enclosing the ball-pocket cam mechanism (3) and the multiple friction disk clutch mechanism (4);
in that said sliding member (2) is mounted on the small diameter part (10) and enclosed by the drum driven member (5), which is provided with the second cam recesses (22) at an end surface opposite to the first recesses (16),
in that said multiple friction disk clutch mechanism (4) comprises interleaved first and second plates (40, 42) which extend between the sliding member (2) and the drum driven member (5) and axially-movable with respect thereto, said first plates (40) being connected to said sliding member to rotate therewith and said second plates being connected to said drum driven member (5) to rotate therewith,
and in that said pressurizing member (7) comprises a plurality of springs (70), a spring receiver (71) mounted on a tip (12) of the small diameter part (10) in a manner to be able to adjust a fixed position in the axial direction.

The cam recess is preferably designed in a form of circular cone or truncated cone. The inclined angle of the cam concave should be determined as depending on the magnitude of the starting torque for disengagement of the clutch mechanism.

In a manufacturing aspect for the multiple disk torque limiting clutch provided with a new ball-pocket coupling which comprises: a driving shaft, a hollow drum driven member to provide a housing space for enclosing a ball-pocket torque limiting mechanism comprising first cam recesses, a sliding member provided with second cam recesses, and cam balls which are pocketed within the first and second recesses and a multiple friction disk clutch mechanism which are connected alternatively to the driving shaft and the driven member rotatably therewith and axial-slidably with respect thereto; and an adjustable pressurizing member to provide a coupling force with the cam balls between the first and second cam recesses and as well as a friction force between the friction clutch plates for driving power transmission according to the present invention,
it is preferable that: said driving shaft comprises a large diameter part, a middle diameter part on which the first pockets are provided at the end' surface and a small diameter part on which the sliding element is mounted slidably in an axial direction,
said the sliding element has a center hole to receive the small diameter part to be inserted; the second cam recesses at an end surface opposite to the first cam recesses when inserted thereto; and also ridge parts and valley parts circumferentially spaced, extend in the axial direction by which the first clutch plates are mounted through a hole corresponding to an outer configuration of the sliding member thereon rotatably therewith and slidably in the axial direction,
said hollow drum driven member is provided with channels circumferentially spaced on an inside wall and extend in the axial direction, which allows, the second clutch plates having a plurality of studs on a peripheral edge of to engage with the channels and a large center hole to be mounted rotatably therewith and slidably in the axial direction, with enclosing the sliding member provided with the first clutch plates
said pressurizing member comprises a plurality of springs a receiver provided with spring receiving holes circumferentially spaced on one end surface opposite to the sliding member and mounted through a center hole thereof on a screwed tip of the small diameter part by a nut in a manner to be able to adjust a fixed position in the axial direction and a washer provided with a center hole to be mounted on the small diameter part and arranged with a buffer space between the spring and the clutch mechanism which acts to keep the connection between the driving shaft and the driven member by means of the multiple friction disk clutch mechanism until a determined extra torque acts on either one of the driving shaft and the driven member

The characteristics of operational response of the ball-pocket cam mechanism can be determined by ratio of change in quantity of the displacement in the axial direction, namely, by an angle of inclination of the inner surfaces of the recesses

The magnitude of a load applied to the driven member for disconnection of the clutch mechanism can be determined by means of combination of a spring force applied to the clutch mechanism and an angle of inclination of the inner surfaces of the recesses

Further, the pressurizing force from the spring members may be set variably and thus the magnitude of torque to be set may follow the force of the spring members.

The above ball-pocket cain mechanism functions as follows.

On the above mechanism, the cam ball which is rotatably positioned in the space between the first and the second cam recesses have a point contact to the surfaces thereof and also tends to rotate within the space at the time of relative displacement between the first and the second cam surfaces, so that the cam displacement can be less influenced by the cam surface finished condition than in the conventional case of area contact between the first and the second cam surfaces.

Further, the relative displacement will occur under the condition that the first and the second cam recess surfaces contact the ball surfaces with a constant angle, so that the starting torque for disconnecting the clutch mechanism will not be less influenced by scattering result of the inclination angle than in the conventional case.

The timing of disconnection of the clutch mechanism can be determined depending on a predetermined ratio or degree of the displacement in the axial direction in the cam mechanism, by which the start time of disconnection is not effected by accuracy of assembling dimension, physical properties of the spring materials or friction plate, or dimension accuracy of the parts. Thus the clutch mechanism can be disconnected highly accurately at the time of applying a required load to the driven member.

Further, since the operational speed of disconnection and connection of the clutch mechanism is determined by the ratio of change in quantity of the displacement by the cam, the characteristic of operational response of the clutch mechanism can be set arbitrarily by changing an inclination angle of the cam concave.

These and other objects and features of the present invention will become apparent from the following description taken in conjunction with the preferred embodiment thereof with reference to the accompanying drawings, iii which;

Fig. 1 is a perspective view for assembly showing an entire device for driving power transmission according to the present invention.

Fig. 2 is a perspective view showing the sliding member 2 seen from the opposite side of Fig.1.

Fig. 3 is a sectional structural view showing the assembled device of Fig.1.

Fig. 4 is a sectional view showing function of the ball-pocket cam mechanism 3 of Fig.3 in which (a) shows a state at the time that the driving shaft 1 is not driving, (b) shows a states at the time that the driving shaft 1 is driving and (c) shows a state at the time that the sliding member axially moves by a distance of the buffer space S and the clutch plates 40 and 42 is disconnected.

Fig.5 is a comparative view of the cam mechanism between the present invention case (a) and the conventional cam mechanism (b).

Fig.6 is a comparative graph showing a relationship between inclination angle of the cam surface and the resulting torque change in the cam mechanisms according to the present invention (a) and the conventional cam mechanism (b).

Fig.7 is a comparative graph showing a relationship between friction coefficient of the cain surface and the resulting torque change iii the cam mechanisms according to the present invention (a) and the conventional cain mechanism (b).

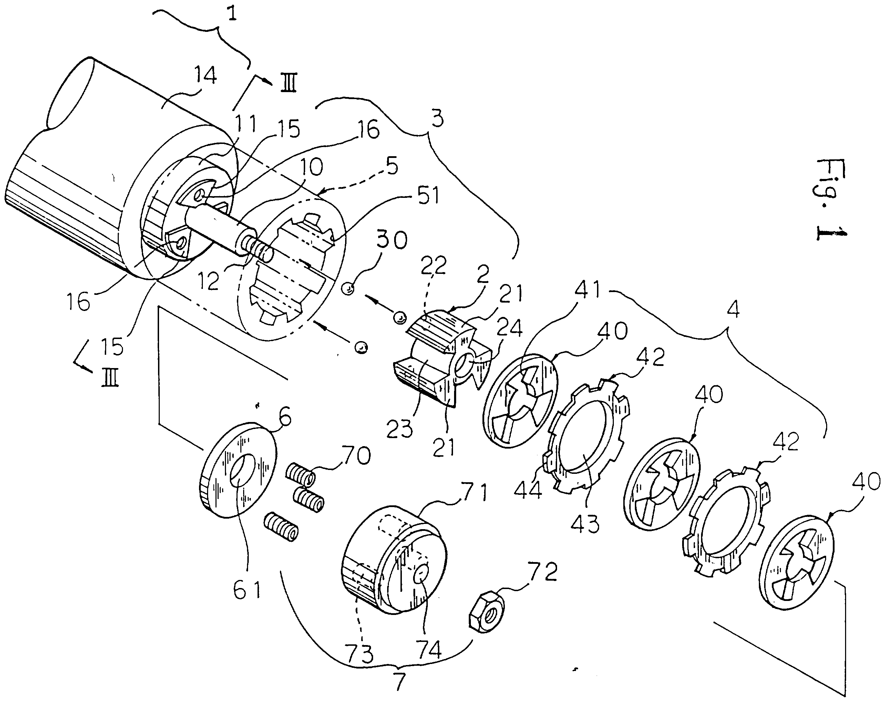

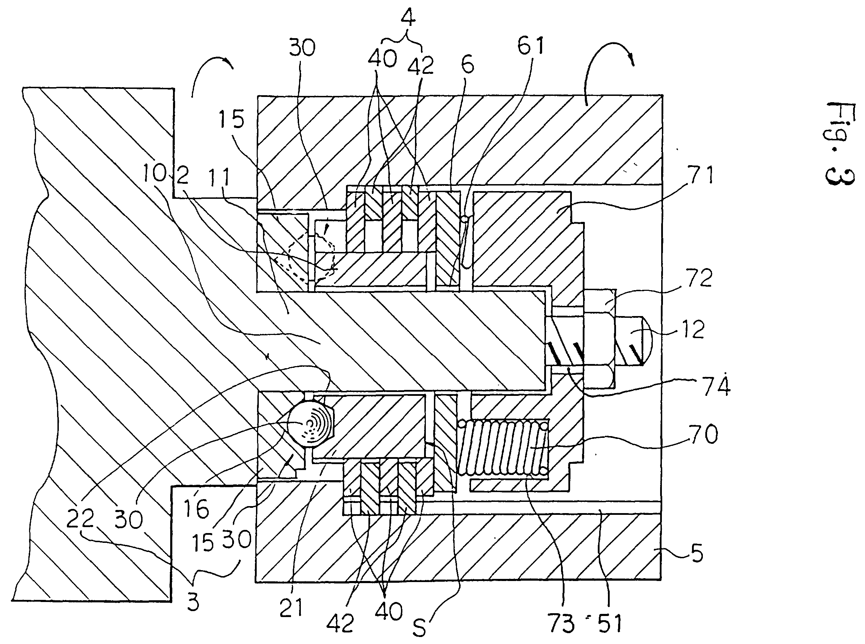

Figs. 1 to 4 show a device for driving power transmission according to a preferred embodiment of the present invention. In the drawings, 1 is a driving shaft to which a rotary shaft (not shown) of a motor of a driving source is attached. The driving shaft 1 comprises a large diameter part 14, a middle diameter part 11 and a small diameter part 10. a plurality of fan-shaped attachment parts 15 provided with a first cam recess 16 of a circular cone shape are arranged at regular intervals of 120 in the circumferential direction and integrally attached to an end surface of the middle diameter part 11. At a tip of the small diameter part 10, there is provided a screw part 12 (See Figs.1 and 3).

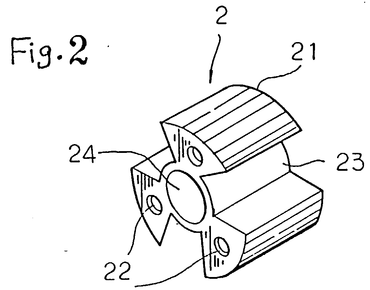

At the outer periphery of the small diameter part 10, a sliding member 2 having a fan-like shape is mounted slidably in an axial direction of the small diameter part 10. As shown in Fig. 2, at the center of the sliding member 2 there are provided with a penetrating hole 20 in the axial direction through which the small diameter part 10 can be slidably inserted. At the outer periphery of the sliding member 2, ridge parts 21 and valley parts 23 are provided in a circumferentially spaced manner with an angle of 120 and extend in the axial direction. On the other hand, second cam recesses 22 of a truncated cone shape are arranged at regular intervals of 120 in the circumferential direction at an end surface opposite to the first cam recesses 16 when the sliding member 2 is inserted thereto. Thus cam balls 30 are pocketed within the first cam recesses 16 and 22 and a ball-pocket cam mechanism 3 is formed.

At the outer periphery of the sliding member 2, a plurality of first clutch plates 40 is provided rotatably therewith and slidably with respect thereto, through a center mounting hole 41 of a shape corresponding to the fan-shaped outer periphery of the sliding member 2.

Moreover, a driven member 5 of a hollow drum shape is provided in an enclosing manner at the outer-periphery of the sliding member 2 with the first clutch plates 40. In the inner surface of the driven member 5, a plurality of second clutch plates 42 is provided in such a manner that each clutch plate 42 alternatively opposes to each clutch plate 40. Each clutch plate 42 is mounted through a center hole 43 to be able to slide on the sliding member 2 and engaged by means of studs 44 to channels 51 extending in the axial direction on the inner surface of the driven member 5 to be able to rotate with the driven member 5. A clutch mechanism 4 is thus formed, in which the driving shaft 1 and the driven member 5 are connected to and disconnected from each other in the axial direction by means of a plurality of the first clutch plates 40 and the second clutch plates 42.

A washer plate 6 is slidably provided through a center hole 61 at the outer periphery of the small diameter part 10 of the driving shaft 1. A plurality of spring members 70 are received in receiving holes 73 of cylindrical spring receiver 71 which is mounted on a tip screwed part 12 of- the small diameter part 10 through a center hole 74 by means of a nut 74. Therefore, the spring members 70 are placed between the washer plate 6 and a spring receiver 7 at an angle of 120 on the circumferencial direction, so that a pressurizing force can be adjusted by means of rotating the nut 72. Thus, a adjustable pressurizing means 7 is formed.

As shown in Fig.3, certain buffer spacing S is set between the washer plate 6 and the sliding member 2. When the cam mechanism 3 carries out the displacement of the rotary resistance produced upon applying a prescribed load in the axial direction, the sliding member 2 is pressed in the axial direction to move through the buffer space S into contact with the washer plate 6, and when the sliding member 2 is further pressed, the clutch plates 40, 42 are disconnected.

Now the operation will be explained.

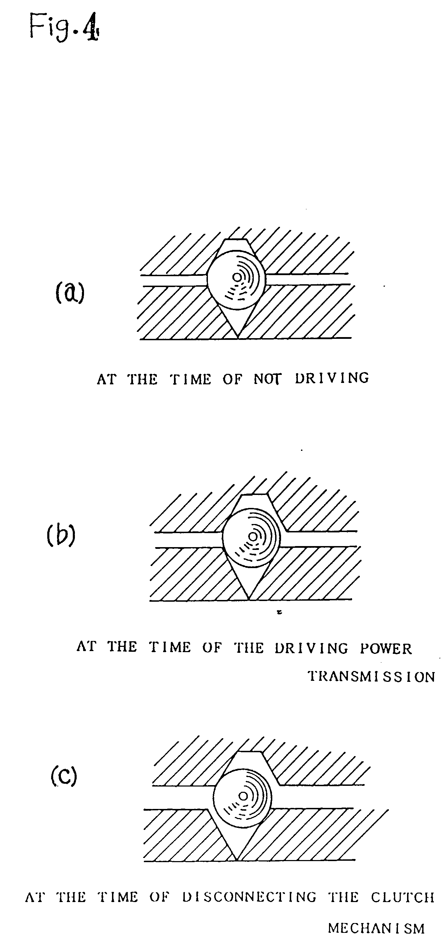

In ordinary circumstances when a load applied to the driven member 5 is small, much position slippage of the cam mechanism 3 does not take place as shown in Fig. 4(b). Only the sliding member 2 slides within a distance of the buffer spacing S between the washer plate 6 and the sliding member 2, and the washer plate does not move backward. The spring members 70 apply a force in the axial direction to the clutch mechanism 4 through the washer plate 6. The friction surfaces of the clutch plates 40, 42 are kept connected to each other. Under these circumstances, when the driving shaft 1 is rotated, the rotational power is transmitted to the driven member 5 via the clutch mechanism 4.

On the other hand, for some reason, when the resistance of the driven member 5 increases, or when the rotary resistance of the driving shaft 1 increases, large position slippage between the first and second cam recesses 16 and 22 takes place in the cam mechanism 3 as shown in Fig. 4(c). The sliding member 2 slides more than a distance of the spacing S made between the washer plate 6 and the sliding member 2. The washer plate 6 moves backward against the force from the spring member 70. Due to this, the clutch plates 40, 42 are disconnected from each other to disconnect the driving shaft 1 from the driven member 5.

When the driving shaft 1 and the driven member 5 are disconnected from each other, the rotary resistance of the driving shaft 1 decreases. In the cam mechanism 3, the position slippage between the first and second cam recesses 16 and 22 becomes small, and each ball 30 goes back. The washer plate 6 moves forward by means of the force from the spring members 7 to connect both clutch plates 40, 42. Thus the driving shaft 1 and the driven member 5 are connected again to each other.

Even if the rotational torque of the driving motor side comes to be beyond the prescribed excessive load, as similar to the above the cam ball 30 may ride on the peripheral wall of the cam recess 22 and thus the sliding member 2 is caused to slide to a more extent than the space S of the washer plate 6 so as to release the engagement between the clutch plates 40 and 42, resulting in disconnection between the driving shaft 1 and the driven member 5.

Thus in the case of an excessive load applied to the driven member 5, the clutch mechanism 3 repeats the operation of disconnection and connection, by which the excessive load is not applied to the driving motor and prescribed rotary torque is smoothly transmitted from the driving shaft 1 to the driven member 5.

The present device for transmitting driving force works without any problems if the positions of the driving and the driven members are reversed.

In the conventional clutches, when the clutch members are worn out, generally set torque decreases and sometimes characteristics change significantly.

On the other hand, in the device for driving power transmission according to the present invention, torque is directly displaced in the axial direction to keep balance with the spring force, by which stable set torque can be obtained regardless of wearing of the clutch plates 40, 42.

The inventor of the present invention manufactured a trial device for driving power transmission according to the present invention and compared to the conventional devices. In the conventional devices, when an excessive load was applied, clutch plates slide with the spring force applied, which is unnecessary for the transmission of rotational power of the clutches. Therefore, since the driven members were influenced by the condition of the friction surfaces, they were not rotated smoothly, by which the set torque significantly changed. To the contrary, according to the present device, it was confirmed that since the friction surfaces of the clutch 4 were automatically adjusted to a set value when an excessive load was applied, smooth and arbitrary set rotary force could be obtained.

Moreover, according to the device of this embodiment, the disconnection timing of the clutch mechanism 4 is set by a predetermined ratio of displacement in the axial direction by the cain 3, by which the start time of disconnection is not effected by accuracy of assembling dimension, physical properties of the spring members 70 or the clutch plates 40, 42, friction characteristics of dust, water, oil and the like on the friction surfaces of the clutch plates 40, 42, or dimensional accuracy of the parts. Accordingly, the clutch mechanism 4 can be accurately disconnected, by which reliability is widely improved.

In the device for driving power transmission, operation speed of the disconnection and connection of the clutch mechanism 4 is determined by the ratio of change in quantity of displacement, by which the characteristics of operational response is considerably good and, unlike the conventional devices, it is not effected by the condition of the friction surfaces of the clutch 4.

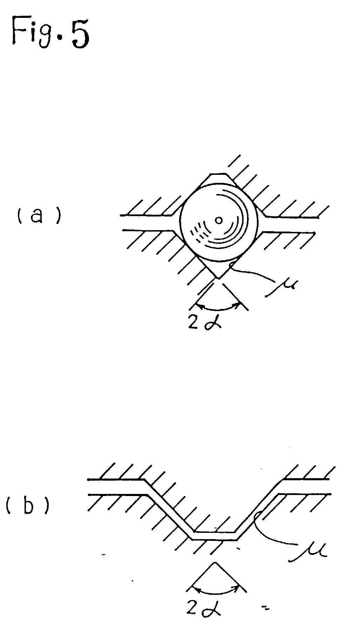

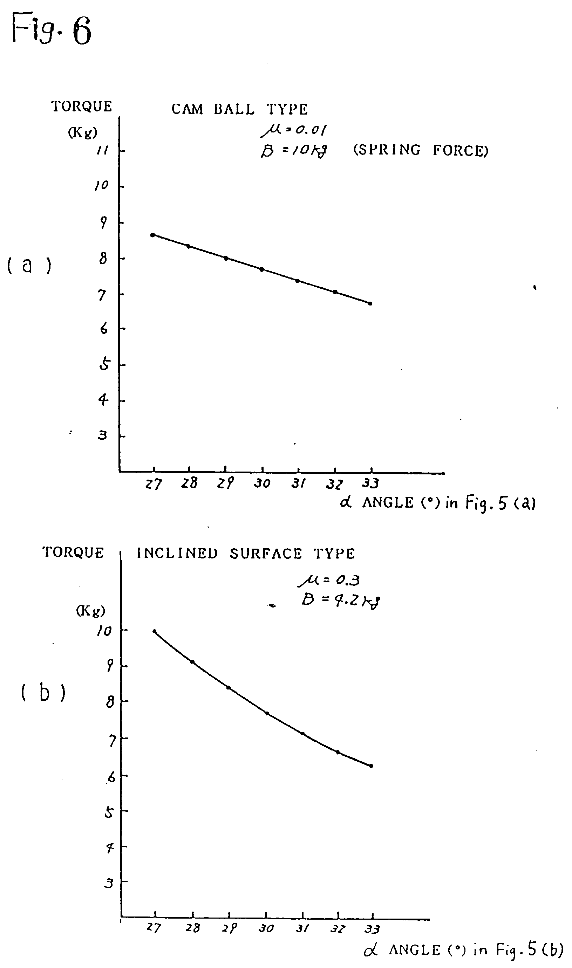

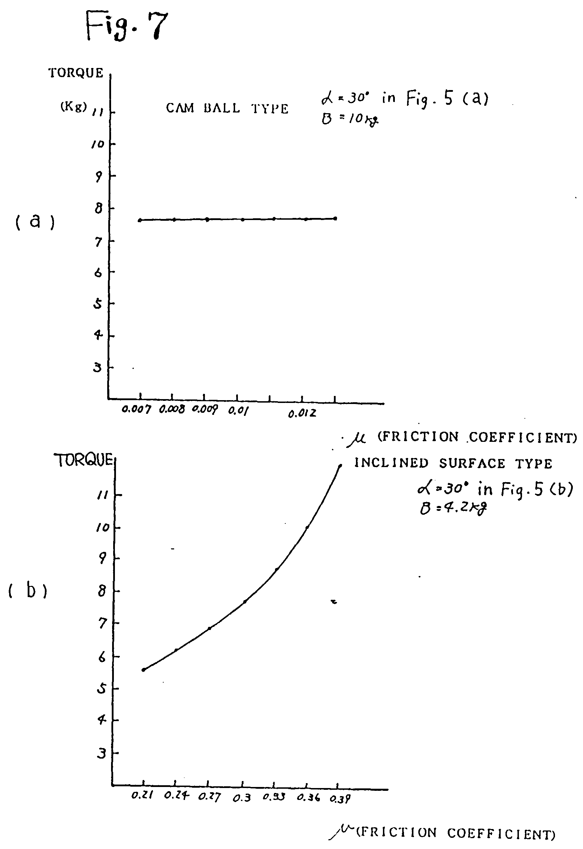

The following experiment for testing the effect of machining accuracy of the cam recesses 16 and 22 against disconnection timing of the clutch mechanism 3 as shown in Fig.5(a) in the aspect of the start torque for the disconnection thereof in comparison with the conventional cam mechanism comprising the cam concave and cam convex as shown in Fig.5(b) was carried out.

In the case of the present invention, the start torque is measured depending on the inclination angle change of the cams under the condition that coefficient of cam surface friction is µ= 0.01 and the spring force B = 10kg. In the conventional case, the same measuring is carried out under the condition that the friction coefficient is µ= 0.3 and the spring force is 4.2kg. The results of the present invention case and the conventional case are shown in Fig.6(a) and (b) wherein α angle is indicated in Fig.5(a) and (b).

As apparent from Fig.6(a) and (b), the present cam mechanism is less effected in terms of the start torque by the inclination cam angle than the conventional mechanism. For example, while 10% dispersion from a designed value of the inclination cam angle causes 88-113 % variation of the start torque in the present invention case, the same dispersion causes 82-130% variation thereof in the conventional case. That is, the torque variation of the present invention is smaller than that of the conventional case.

On the other hand, the start torque is also measured depending on variation of the friction coefficient in the above cam mechanisms under the same condition as above. The results of the present invention case and the conventional case are shown in Fig.7(a) and (b) wherein α=30° in Fig.5(a) and (b).

As apparent from Fig.7(a) and (b), the start torque in the present invention case is constant with no connection with the friction coefficient variation. On the contrary, the start torque of the conventional case is widely changed. That is, 30% dispersion from a designed value of the friction coefficient causes 73-156% variation of the start torque. However, the spring force dispersion causes the same effect in the above both cases.

According to the device for transmitting driving power of the present invention, the structure is very simple, therefore assembly can be easily carried out and automation of manufacture can be easily attained.

According to the device for driving power transmission of the present invention, the cam ball is placed rotatably in the space defined by the first and the second cam recesses between the driving shaft and the driven member and converts the rotary resistance of the driving shaft, caused by applying a prescribed load to the driven member, to the displacement in the axial direction. With the displacement, the spring force applied to the clutch member is intercepted or reduced to disconnect the clutch mechanism. Therefore, torque transmission between the driving shaft and the driven member is highly accurately carried out with good responsive characteristics. Further required and stable torque setting is carried out. Accordingly reliability and durability are highly improved.

## Claims

1. A device for transmission of power from a driving shaft (1) to a driven member (5) comprising:
a multiple friction disk clutch mechanism (4) arranged to connect the driving shaft (1) and the driven member (5); a ball-pocket cam mechanism (3) comprising first cam recesses (16), a sliding member (2) provided with second cam recesses (22) and cam balls (3) which are pocketed within the first and second recesses (16) and (22); and an adjustable pressurizing member (7) to provide a coupling force with the cam balls (3) between the first and the second cam pockets (16) and (22) as well as a friction force between the friction clutch plates (4);
characterized in that said driving shaft (1) carries the first recesses (16) on an end surface thereof, the driving shaft (1) comprising a small diameter part (10) on which the sliding member (2) can be mounted to slide in an axial direction thereof,
in that said driven member (5) is a hollow drum shape to provide a housing space for enclosing the ball-pocket cam mechanism (3) and the multiple friction disk clutch mechanism (4),
in that said sliding member (2) is mounted on the small diameter part (10) and enclosed by the drum driven member (5), which is provided with the second cam recesses (22) at an end surface opposite to the first recesses (16),
in that said multiple friction disk clutch mechanism (4) comprises interleaved first and second plates (40, 42) which extend between the sliding member (2) and the drum driven member (5) and axially-movable with respect thereto, said first plates (40) being connected to said sliding member (2) to rotate therewith and said second plates (42) being connected to said drum driven member (5) to rotate therewith,
and in that said pressurizing member (7) comprises a plurality of springs (70), a spring receiver (71) mounted on a tip (12) of the small diameter part (10) in a manner to be able to adjust a fixed position in the axial direction.

2. A device according to claim 1 in which the driven member (5) comprises a hollow drum to provide a housing space for enclosing a ball-pocket cam mechanism (3) and in which said driving shaft (1) comprises a larger diameter part (14), a middle diameter part (11) on which the first pockets (16) are provided at the end surface and a small diameter part (10) on which the sliding element (2) is mounted slidably in an axial direction,
said the sliding element (2) has a center hole (24) to receive the small diameter part (10) to be inserted; the second cam recesses (22) at an end surface opposite to the first cam recesses (16) when inserted thereto; and also ridge parts (21) and valley parts (23) circumferentially spaced, extend in the axial direction by which the first clutch plates (40) are mounted through a hole corresponding to an outer configuration of the sliding member (2) thereon rotatably therewith and slidably in the axial direction,
said hollow drum driven member (5) is provided with channels (51) circumferentially spaced on an inside wall and extend in he axial direction, which allows, the second clutch plates (42) having a plurality of studs (44) on a peripheral edge thereof to engage with the channels (51) and a large center hole (43), to be mounted rotatably therewith and slidably in the axial direction, with enclosing the sliding member (2) provided with the first clutch plates (40),
said pressurizing member (7) comprises a plurality of springs (70), a receiver (71) provided with spring receiving holes (73) circumferentially spaced on one end surface opposite to the sliding member (2) and mounted through a center hole (74) thereof on a screwed tip (12) of the small diameter part (10) by a nut (72) in a manner to be able to adjust a fixed position in the axial direction and a washer (6) provided with a center hole (61) to be mounted on the small diameter part (10) and arranged with a buffer space (S) between the spring (70) and the clutch mechanism (4) which acts to keep the connection between the driving shaft (1) and the driven member (5) by means of the multiple friction disk clutch mechanism (4) until a determined extra torque acts on either one of the driving shaft (1) and the driven member (5).

3. A device according to claim 1 or claim 2, in which a plurality of the cam recesses (16) and (22) are arranged at regular intervals in the circumferential direction on each surface of the driving shaft and the sliding member to be contacted with each other.

4. A device according to claim 1 or claim 2, in which the cam recesses (16) and (22) are circular cone shaped or truncated circular cone shaped, by which the cam ball (30) is rotatably pocketed.

## Patentansprüche

1. Vorrichtung zur Kraftübertragung von einer Antriebswelle (1) zu einem angetriebenen Element (5), umfassend:
einen Mehrfach-Reibscheiben-Kupplungsmechanismus (4), der so angeordnet ist, daß die Antriebswelle (1) und das angetriebene Element (5) miteinander verbunden werden; einen Kugeltaschennockenmechanismus (3), der erste Nockenausnehmungen (16), ein mit zweiten Nockenausnehmungen (22) versehenes Gleitelement (2) und Nockenkugeln (30) umfaßt, die in den ersten und zweiten Ausnehmungen (16) und (22) aufgenommen sind; und ein einstellbares Druckbeaufschlagungselement (7), um eine Kupplungskraft mit den Nockenkugeln (30) zwischen den ersten und den zweiten Nockentaschen (16) und (22) sowie eine Reibungskraft zwischen den Reibungskupplungsplatten (4) zu schaffen;
dadurch gekennzeichnet, daß die Antriebswelle (1) die ersten Ausnehmungen (16) auf einer ihrer Endflächen trägt, wobei die Antriebswelle (1) einen Teil (10) mit kleinem Durchmesser umfaßt, auf dem das Gleitelement (2) montiert sein kann, um in eine axiale Richtung davon zu gleiten,
daß das angetriebene Element (5) die Form einer hohlen Trommel aufweist, um einen Gehäuseraum zum Umschließen des Kugeltaschennockenmechanismus (3) und des Mehrfach-Reibscheibenkupplungsmechanismus (4) bereitzustellen,
daß das Gleitelement (2) auf dem Teil (10) mit kleinem Durchmesser montiert und vom trommelförmigen angetriebenen Element (5) umschlossen ist, das an einer Endfläche gegenüber den ersten Ausnehmungen (16) mit den zweiten Nockenausnehmungen (22) versehen ist,
daß der Mehrfach-Reibscheibenkupplungsmechanismus (4) hintereinandergeschachtelte erste und zweite Platten (40, 42) umfaßt, die sich zwischen dem Gleitelement (2) und dem trommelförmigen angetriebenen Element (5) erstrecken und bezogen darauf axial beweglich sind, wobei die ersten Platten (40) mit dem Gleitelement (2) so verbunden sind, daß sie damit rotieren, und die zweiten Platten (42) mit dem trommelförmigen angetriebenen Element (5) so verbunden sind, daß sie damit rotieren,
und daß das Druckbeaufschlagungselement (7) eine Vielzahl von Federn (70) umfaßt, wobei ein Federaufnehmer (71) auf einer Spitze (12) des Teils (10) mit kleinem Durchmesser so montiert ist, daß in axialer Richtung eine fixe Position eingestellt werden kann.

2. Vorrichtung nach Anspruch 1, bei der das angetriebene Element (5) eine hohle Trommel umfaßt, um einen Gehäuseraum zum Umschließen eines Kugeltaschennockenmechanismus (3) bereitzustellen, und bei der die Antriebswelle (1) einen Teil (14) mit größerem Durchmesser, einen Teil (11) mit mittlerem Durchmesser, auf dem die ersten Taschen (16) an der Endfläche vorgesehen sind, und einen Teil (10) mit kleinem Durchmesser umfaßt, auf dem das Gleitelement (2) so montiert ist, daß es in eine axiale Richtung gleiten kann,
das Gleitelement (2) ein Mittelloch (24) zum Aufnehmen des einzufügenden Teils (10) mit kleinem Durchmesser aufweist; im eingefügten Zustand sich die zweiten Nockenausnehmungen (22) an einer Endfläche gegenüber den ersten Nockenausnehmungen (16) befinden; und weiters vorspringende Teile (21) und Vertiefungsteile (23), die den Umfang entlang beabstandet sind und sich in die axiale Richtung erstrecken, vorgesehen sind, durch die die ersten Kupplungsplatten (40) drehbar damit und in axialer Richtung gleitfähig durch ein Loch hindurch montiert sind, das einer Außenkonfiguration des Gleitelements (2) entspricht,
das angetriebene Element (5) in Form einer hohlen Trommel mit Kanälen (51) versehen ist, die den Umfang entlang an einer Innenwand beabstandet sind und sich in axialer Richtung erstrecken, was es ermöglicht, daß die zweiten Kupplungsplatten (42), die eine Vielzahl von Bolzen (44) an einer peripheren Kante davon zum Ineinandergreifen mit den Kanälen (51) und einem großen Mittelloch (43) aufweisen, drehbar damit und in axiale Richtung gleitfähig zu montieren sind, wobei das mit den ersten Kupplungsplatten (40) versehene Gleitelement (2) umschlossen ist,
das Druckbeaufschlagungselement (7) eine Vielzahl von Federn (70) umfaßt, sowie einen Aufnehmer (71), der mit Federaufnahmelöchern (73) versehen ist, die an einer Endfläche gegenüber dem Gleitelement (2) den Umfang entlang beabstandet sind, und der mittels einer Mutter (72) durch ein Mittelloch (74) davon hindurch auf einer Schraubenspitze (12) des Teils (10) mit kleinem Durchmesser auf solche Weise montiert ist, daß in axialer Richtung eine fixe Position eingestellt werden kann, und eine mit einem Mittelloch (61) versehene Unterlegscheibe (6), die auf dem Teil (10) mit kleinem Durchmesser zu montieren und mit einem Pufferraum (S) zwischen der Feder (70) und dem Kupplungsmechanismus (4) angeordnet ist, mit der Wirkung, die Verbindung zwischen der Antriebswelle (1) und dem angetriebenen Element (5) durch den Mehrfach-Reibscheibenkupplungsmechanismus (4) aufrecht zu erhalten, bis ein bestimmtes Extra-Drehmoment entweder auf die Antriebswelle (1) oder das angetriebene Element (5) wirkt.

3. Vorrichtung nach Anspruch 1 oder 2, bei der eine Vielzahl der Nockenausnehmungen (16) und (22) in regelmäßigen Intervallen in Umfangsrichtung auf jeder Oberfläche der Antriebswelle und des Gleitelements angeordnet ist, die miteinander in Kontakt zu bringen sind.

4. Vorrichtung nach Anspruch 1 oder 2, bei der die Nockenausnehmungen (16) und (22) die Form eines kreisförmigen Kegels oder eines kreisförmigen Kegelstumpfes haben, durch die die Nockenkugel (30) drehbar umfaßt wird.

## Revendications

1. Dispositif pour transmission de puissance d'un arbre moteur (1) à un élément entraîné (5), comprenant :
un mécanisme d'embrayage à disque de friction multiple (4) agencé pour relier l'arbre moteur (1) et l'élément entraîné (5) ; un mécanisme de came à bille-alvéole (3) comprenant des premières alvéoles de came (16), un élément coulissant (2) pourvu de secondes alvéoles de came (22) et des billes de came (3) qui sont logées dans les premières et secondes alvéoles (16 et 22) ; et un élément de pressurisation réglable (7) pour fournir une force d'accouplement avec les billes de came (3) entre les premières et secondes alvéoles de came (16 et 22) ainsi qu'une force de friction entre les plaques de friction d'embrayage (4) ;
caractérisé en ce que ledit arbre moteur (1) porte les premières alvéoles (16) sur une surface d'extrémité de celui-ci, l'arbre moteur (1) comprenant une portion de petit diamètre (10) sur laquelle l'élément coulissant (2) peut être monté pour coulisser dans une direction axiale de celui-ci,
en ce que ledit élément entraîné (5) a une forme en tambour creux pour ménager un espace de réception pour enfermer le mécanisme de came à bille-alvéole (3) et le mécanisme d'embrayage à disque de friction multiple (4),
en ce que ledit élément coulissant (2) est monté sur la portion de petit diamètre (10) et enfermé par l'élément entraîné en forme de tambour (5), qui est muni des secondes alvéoles de came (22) à une surface d'extrémité opposée aux premières alvéoles (16),
en ce que ledit mécanisme d'embrayage à disque de friction multiple (4) comprend des premières et secondes plaques intercalées (40, 42) qui s'étendent entre l'élément coulissant (2) et l'élément entraîné en forme de tambour (5) et sont axialement mobiles par rapport à eux, lesdites premières plaques (40) étant connectées audit élément coulissant (2) pour tourner avec celui-ci et lesdites secondes plaques (42) étant connectées audit élément entraîné en forme de tambour (5) pour tourner avec celui-ci,
et en ce que ledit élément de pressurisation (7) comprend une pluralité de ressorts (70), un siège de ressort (71) monté sur un sommet (12) de la portion de petit diamètre (10) de manière à pouvoir régler une position fixée dans la direction axiale.

2. Dispositif selon la revendication 1, dans lequel l'élément entraîné (5) comprend un tambour creux pour ménager un espace de réception pour enfermer un mécanisme de came à bille-alvéole (3) et dans lequel ledit arbre moteur (1) comprend une portion de diamètre plus grand (14), une portion de diamètre intermédiaire (11) sur laquelle les premières alvéoles (16) sont prévues au niveau de la surface d'extrémité et une portion de petit diamètre (10) sur laquelle l'élément coulissant (2) est monté coulissant dans la direction axiale,
ledit élément coulissant (2) a un trou central (24) pour recevoir la portion de petit diamètre (10) à insérer ; les secondes alvéoles de came (22) au niveau d'une surface d'extrémité opposée aux premières alvéoles de came (16) lorsqu'elle y est insérée ; et également des portions de crête (21) et des portions de vallée (23) circonférentiellement espacées, qui s'étendent dans la direction axiale par laquelle les premières plaques d'embrayage (40) sont montées à travers un trou correspondant à une configuration externe de l'élément coulissant (2) sur celui-ci solidairement en rotation et de manière coulissante dans la direction axiale,
ledit élément entraîné en forme de tambour creux (5) est muni de canaux (51) circonférentiellement espacés sur une paroi interne et s'étendant dans la direction axiale, ce qui permet aux secondes plaques d'embrayage (42) ayant une pluralité de pattes (44) sur un bord périphérique de celles-ci de s'engager dans les canaux (51) et un grand trou central (43) d'être montées solidaires en rotation avec celui-ci et de manière coulissante dans la direction axiale, en enfermant l'élément coulissant (2) muni des premières plaques d'embrayage (40),
ledit élément de pressurisation (7) comprend une pluralité de ressorts (70), un siège (71) muni de trous de réception de ressort (73) circonférentiellement espacés sur une surface d'extrémité opposée à l'élément coulissant (2) et monté à travers un trou central (74) de celui-ci sur un sommet fileté (12) de la portion de petit diamètre (10) par un écrou (72) de manière à pouvoir régler une position fixée dans la direction axiale et une rondelle (6) munie d'un trou central (61) destinée à être montée sur la portion de petit diamètre (10) et agencée avec un espace tampon (S) entre le ressort (70) et le mécanisme d'embrayage (4) qui agit pour garder la connexion entre l'arbre moteur (1) et l'élément entraîné (5) au moyen du mécanisme d'embrayage à disque de friction multiple (4) jusqu'à ce qu'un couple supplémentaire déterminé agisse sur l'arbre moteur (1) ou l'élément entraîné (5).

3. Dispositif selon la revendication 1 ou 2, dans lequel une pluralité d'alvéoles de came (16 et 22) sont agencées à intervalles réguliers dans la direction circonférentielle sur chaque surface de l'arbre moteur et de l'élément coulissant qui doivent venir en contact l'une avec l'autre.

4. Dispositif selon la revendication 1 ou 2, dans lequel les alvéoles de came (16 et 22) ont une forme conique circulaire ou une forme tronconique circulaire, dans lesquelles les billes de came (30) sont logées de manière rotative.
